Europäisches Patentamt

European Patent Office

Office européen des brevets

(11) Numéro de publication: **0 146 440**
**A1**

## (12) DEMANDE DE BREVET EUROPEEN

(21) Numéro de dépôt: **84402301.0**

(22) Date de dépôt: **13.11.84**

(51) Int. Cl.⁴: **H 04 J 7/00**

(30) Priorité: **15.11.83 FR 8318119**

(43) Date de publication de la demande: **26.06.85**
**Bulletin 85/26**

(84) Etats contractants désignés: **AT BE CH DE FR GB IT LI LU NL SE**

(71) Demandeur: **Michel, Max, 7, rue de la Chapelle St-Sauveur Aincourt, F-95510 Vetheuil (FR)**

(72) Inventeur: **Michel, Max, 7, rue de la Chapelle St-Sauveur Aincourt, F-95510 Vetheuil (FR)**

(54) **Procédé et dispositif de modulation pour la transmission simultanée de signaux analogiques et de signaux numériques.**

(57) Le signal utile analogique module une porteuse. Le signal numérique module une porteuse de même phase et de même fréquence. Les amplitudes des deux porteuses modulées sont additionnées.

La valeur du signal numérique différente de zéro est d'une amplitude absolue constante; la valeur maximale absolue du signal analogique est inférieure, d'une valeur connue au signal numérique. Le nombre maximum d'éléments binaires transmissibles par seconde est égal à deux fois la fréquence, ce qui correspond à une addition à chaque demi-alternance des porteuses modulées.

EP 0 146 440 A1

La présente invention a pour objet un procédé de modulation permettant de transmettre simultanément des signaux analogiques et numériques avec un encombrement de fréquence inférieur à celui requis par les moyens connus.

Quand l'on veut émettre et recevoir des données analogiques et numériques sur un même réseau téléphonique (lignes commutées), sur des lignes louées, ou sur un canal satellitaire, il est d'usage de partager la bande passante utilisable au moyen de filtres, et d'envoyer séparément, sur chacun des sous canaux ainsi formés, d'une part le signal analogique, et d'autre part le signal numérique au moyen d'un modem.

Une variante consiste à numériser le signal analogique, et à le multiplexer avec le signal numérique et à envoyer ce signal numérique multiplexé à un modem dont le signal émis sera propre à être véhiculé par le réseau choisi. Ces solutions présentent plusieurs inconvénients :

Si l'on sépare la bande passante utile par des filtres, une grande partie de cette bande sera perdue, perte due à l'utilisation de ladite bande par une plage morte nécessaire à la séparation analogique des sous-bandes ainsi formées, pour éviter tout phénomène d'intermodulation.

Si l'on utilise le principe du multiplexeur, après avoir numérisé le signal analogique, on sera tenu d'utiliser une bande passante plus grande que celle prévue initialement si l'on veut garder le signal analogique exempt de toute forme de distorsions.

Un exemple numérique non limitatif, comme décrit ci-après, permettra de mieux saisir le problème.

Si l'on désire transmettre simultanément un signal analogique dont la bande passante est de 2400 Hz, et un signal numérique de 4800 bits binaires par seconde sur un canal analogique, la bande passante de ce canal devra être égale à 2400 Hz plus la largeur de bande requise par la modulation d'un signal analogique par un signal numérique de 4800 bits binaires par seconde, à savoir : 1500 Hz minimum, dans le cas d'une modulation simultanée de phase et de fréquence. La bande passante nécessaire sera donc de 3900 Hz.

Si, par ailleurs, on utilise un canal numérique, on est amené à utiliser un canal possédant un débit binaire de 4800 bits/seconde, plus le débit nécessaire à transmettre correctement un signal analogique de 2400 Hz, selon la loi de SHANNON, 4800 échantillons, chacun de ceux-ci quantifié sur 8 bits binaires : soit 38400 bits.

On arrive, dans ce cas à un débit total de 38400 + 4800, soit 43200 bits binaires par seconde. Cela interdit l'usage d'une ligne de transmission conventionnelle dont la bande passante est de 3300 Hz en Europe et de 2700 Hz en Amérique du Nord, permettant de véhiculer 14400 bits par seconde au moyen d'un modem très onéreux, et à condition que la ligne de transmission soit de qualité supérieure. Si même on applique plusieurs codes de compression afin de réduire le débit binaire, il semble difficile de réduire le débit en deça de 10000 bits par seconde.

Hormis la complexité technique inhérente à ce traitement de compression à l'émission et de décompression à la réception, le coût du matériel à mettre en oeuvre pour la transmission et la réception (modem et multiplexeur), reste très élevé, vingt fois plus, environ, que dans la solution préconisée par le demandeur.

Donc, quelque soit la technique employée, il est sinon impossible ou tout au moins extrêmement coûteux de transmettre la somme des informations précitées sur un canal analogique de 3300 Hz de bande passante, et de qualité supérieure. A fortiori sur un réseau de 2700 Hz de bande passante.

Un objet de la présente invention est de fournir un procédé pour la transmission simultanée de signaux analogiques et de signaux numériques caractérisé en ce qu'au moins un signal porteur analogique modulé par le signal analogique à véhiculer et au moins un signal analogique porteur modulé par un signal numérique synchrone ou non à ce signal porteur sont additionnés en amplitude, étant spécifié que les deux ondes porteuses à moduler sont de même phase et même fréquence.

Un autre objet de la présente invention réside dans le fait qu'il permet d'appliquer un encryptage dans lequel on peut faire varier l'amplitude des signaux numériques selon un mode aléatoire ou pseudo-aléatoire uniquement connu des correspondants.

Encore un autre objet de la présente invention est de fournir un dispositif de modulation pour la transmission simultanée de signaux analogiques et de signaux numériques caractérisé en ce qu'il comprend, d'une part à l'émission, un modulateur, un générateur de signal porteur et d'horloge, un modulateur du signal numérique et un additionneur analogique, ces fonctions pouvant être remplies par un micro-processeur, et, d'autre part, à la réception, un démodulateur double-alternance, un trieur de "SCHMIDT", un amplificateur-limiteur, un modulateur du signal numérique, un circuit soustracteur, ces mêmes fonctions pouvant être remplies par un micro-processeur.

Dans un mode de réalisation préférée de l'invention :

L'addition des signaux numériques et des signaux analogiques, se fait à chaque alternance ou chaque demi-alternance du signal analogique.

La valeur binaire, 1 ou 0, du signal numérique est additionnée à la demi-alternance ou à l'alternance correspondante du signal analogique, et dans le cas de l'addition à la demi-alternance avec le signe de cette demi-alternance, l'amplitude du signal numérique de valeur 1 additionnée étant une valeur constante.

La valeur absolue maximale du signal analogique doit être inférieure à la valeur absolue du signal numérique représentant un état 1, de sorte que le tri en amplitude soit possible à la réception.

D'autres avantages et caractéristiques de l'invention apparaîtront à la lecture de la description suivante, donnée à titre illustratif et nullement limitatif de l'invention, en référence aux dessins annexés dans lesquels :

Fig. 1 représente un signal numérique binaire

Fig. 2 représente une onde porteuse sinusoïdale modulée en amplitude par un signal analogique échantillonné à chaque valeur absolue maxima de la sinusoïde porteuse.

Fig. 3 représente la sommation en amplitude de deux porteuses de mêmes phases et fréquences modulées en amplitude respectivement par le signal analogique et le signal numérique.

Fig. 4 représente la réalisation matérielle d'un encodeur faisant partie du dispositif destiné à mettre en oeuvre l'invention.

Fig. 5 représente un dispositif décodeur faisant partie du dispositif destiné à mettre en oeuvre l'invention.

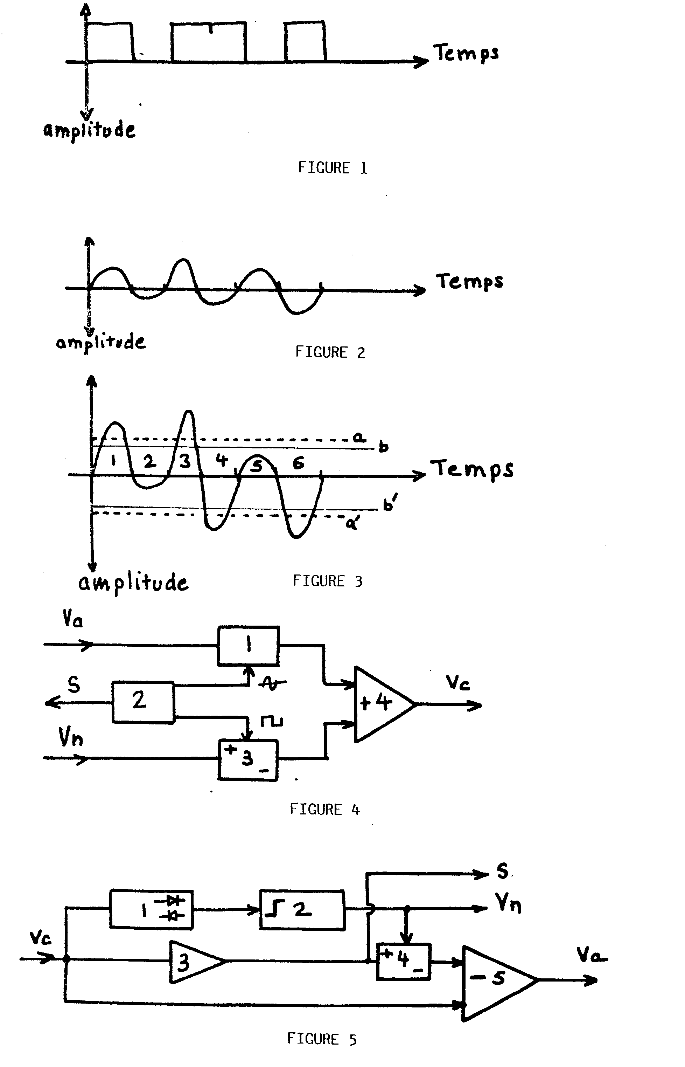

Sur la figure 1 est représenté un signal numérique binaire qu'on peut écrire "101101".

Sur la figure 2 est représentée une porteuse sinusoïdale modulée en amplitude par le signal analogique à transmettre.

Sur la figure 3 qui illustre la sommation des deux modulations selon le procédé de l'invention, les deux lignes en pointillé représentent la valeur maximum du signal numérique (a et a') et les deux lignes (b et b') représentent la valeur maximum du signal analogique. Si l'on numérote les demi alternances successives de 1 à 6, on remarque que si le signal de la figure 1 indique un état positif (1), cet état sera additionné au signal de la figure 2, avec la polarité de la demi sinusoïde en phase. Ainsi, la demi période 1 (figure 3) est la sommation affectée d'un signe plus des signaux correspondants des figures 1 et 2. La demi période 2 (figure 3) indique la présence d'un zéro binaire et de la demi sinusoïde négative. La demi période 4 (figure 3) indique une demi-sinusoïde négative additionnée avec un 1 binaire, l'ensemble affecté d'un signe négatif, puisque la demi sinusoïde correspondante de la figure 2, est négative.

C'est donc l'addition de deux porteuses de même fréquence et même phase, l'une modulée par le signal analogique, l'autre par le signal numérique.

Lorsque l'addition du signal numérique au signal analogique est faite de façon synchrone à chaque demi alternance du signal analogique, on obtiendra le débit maximum ;
en effet pour un signal analogique de bande passante P,
modulant une fréquence porteuse F, avec la bande latérale
supérieure atténuée, il est possible d'ajouter à ce signal
un nombre de bits binaires par seconde, égal à 2F, d'après
la loi de Shannon.

Soit un signal de bande passante égale à 2400 Hz,
modulant une porteuse à 2400 Hz, avec la bande latérale supérieure atténuée ; on peut donc ajouter à ce signal analogique, un signal numérique égal à 4800 bits par seconde.

En se référant aux figures 1, 2 et 3, on peut
constater que la seule façon de séparer le signal analogique (Va) du signal numérique (Vn), à chaque demi alternance,
est un tri par amplitude. Il importe donc de donner à Vn une
amplitude constante ; quand le bit binaire = 0, Vn = 0 et
quand le bit binaire = 1, Vn = + ou - une valeur constante.
Il faudra donc que l'amplitude absolue de Va, soit inférieure
à la valeur absolue de Vn, de telle sorte qu'il sera toujours
possible à la réception, de différencier les deux informations : si la valeur absolue du signal composite est inférieure à Vn, on est en présence d'un bit égal à zéro, et d'un
signal analogique égal à cette valeur absolue ; par contre,
si la valeur absolue du signal composite est égale ou supérieure à Vn, on sera en présence d'un bit égal à 1, et d'un
signal analogique égal à la valeur du signal composite, moins
la valeur du signal numérique.

Dans l'encodeur représenté sur la figure 4, la
valeur absolue du signal numérique égale à 1 est de 400 millivolts, et la valeur absolue maximum du signal analogique est
de 300 millivolts, de sorte qu'il n'y aura aucune ambiguïté
dans la reconnaissance des signaux respectifs.

Le schéma-bloc de la figure 4 représente le signal
analogique Va entrant dans un modulateur 1, alimenté par un
signal porteur sinusoïdal produit par l'oscillateur 2. Le
signal issu du modulateur 1 est ensuite appliqué à l'une des
deux entrées de l'additionneur 4. Le signal numérique Vn est
appliqué à l'entrée d'un circuit 3 qui délivrera pour chaque signal binaire égal à 1, une valeur constante affectée du signe de la demi sinusoïde en phase. Le signal issu de 3, sera additionné au signal issu de 1, dans l'additionneur 4, qui délivrera un signal composite, Vc, propre à être envoyé sur un réseau analogique.

Sur la figure 5, le signal composite, Vc, est appliqué à l'entrée d'un redresseur double alternance 1, suivi par un trieur de "SCHMIDT" 2, lequel prendra en compte tous les signaux supérieurs à la valeur maximale du signal analogique. La sortie de 2 délivrera le signal numérique Vn. Le signal Vc est également appliqué à l'entrée d'un amplificateur à saturation 3, dont la sortie délivrera un signal en créneau, synchrone à la fréquence porteuse modulée Va. Ce signal en créneau pourra servir d'horloge pour décoder le signal numérique, à la sortie S.

Ce signal horloge est également appliqué au circuit 4, de sorte qu'à la sortie le circuit délivre le signal numérique Vn avec les "1" (états positifs binaires) de même signe que les demi sinusoïdes synchrones du signal composite. La sortie de 4 est donc appliquée à l'entrée d'un soustracteur 5, dont la seconde entrée reçoit le signal composite Vc.

La sortie de ce soustracteur délivrera donc le signal module Va, lequel sera démodulé par des moyens connus de l'homme de l'art.

Il est de toute évidence qu'il faudra ajouter à ce circuit, un contrôle de gain automatique, et que le signal composite peut comporter des signaux récurrents d'amplitude connue, destinés à détecter toute variation d'amplification du réseau supportant le signal, et par là même prévenir toute variation d'amplitude intempestive. Là encore, ce genre de technique est parfaitement connue de l'homme de l'art et est couramment appliquée.

Une variante pourrait consister à transmettre un élément binaire par période entière, au lieu de deux, comme décrit ci-dessus. Cela diviserait par deux le nombre d'éléments binaires qui serait égal à F (fréquence de la porteuse Va), au lieu de 2xF. Néanmoins, cela peut présenter un avantage

0146440

quand on désire transmettre un signal analogique avec un minimum de distorsions harmoniques et d'amplitude.

Il est évident que les exemples pris ici pour expliquer le procédé, ne sont nullement limitatifs, et toute réalisation reprenant le principe de sommation des informations analogiques modulant une porteuse et d'un signal numérique modulant une porteuse de même phase et fréquence que la première, que chaque modulation soit indifféremment en amplitude, en phase, ou en fréquence, ne s'écarte pas pour autant de la présente invention, même pour des fréquences totalement différentes et/ou sur des réseaux ou canaux également différents.

8

# REVENDICATIONS

1. Procédé de modulation pour la transmission simultanée de signaux analogiques et de signaux numériques caractérisé en ce que au moins un signal analogique porteur modulé par le signal analogique à véhiculer et au moins un signal analogique porteur modulé par le signal numérique sont additionnés /en amplitude/.

2. Procédé selon la revendication 1 caractérisé en ce que les deux porteuses sont de même phase et de même fréquence.

3. Procédé selon l'une quelconque des revendications 1 et 2, caractérisé en ce que le débit maximum de transmission est atteint lorsque la valeur binaire, 1 ou 0, du signal numérique, est additionnée à la demi alternance correspondante du signal analogique porteur avec le signe de cette demi alternance.

4. Procédé selon l'une des revendications 1 à 3, caractérisé en ce que l'amplitude du signal numérique de valeur 1 à additionner, est une valeur constante.

5. Procédé selon l'une des revendications 1 à 4, caractérisé en ce que la valeur absolue maximale du signal analogique modulé doit être inférieure à la valeur absolue du signal numérique modulé représentant un état 1, de telle sorte que le tri en amplitude soit possible à la réception.

6. Procédé selon l'une des revendications 1 à 5, caractérisé en ce que les signaux porteurs peuvent être modulés en amplitude, de préférence en bande latérale atténuée, en phase ou en fréquence.

7. Application du procédé selon l'une des revendications 1 à 6, caractérisé en ce qu'il permet d'appliquer un encryptage dans lequel on peut faire varier l'amplitude des signaux numériques selon un mode aléatoire ou pseudo aléatoire uniquement connu des correspondants.

8. Dispositif pour la mise en oeuvre du procédé selon l'une des revendications 1 à 7, caractérisé en ce qu'il comprend, d'une part, à l'émission, un modulateur, un générateur de signal porteur et d'horloge, un modulateur de signe du signal numérique et un additionneur analogique ; et, d'autre part,
à la réception, un démodulateur double alternance, un trieur
de "SCHMIDT", un amplificateur limiteur, un modulateur de
signe du signal numérique et un circuit soustracteur.

9. Dispositif selon la revendication 8, caractérisé
en ce que, tant à l'émission qu'à la réception, l'ensemble des
fonctions sont remplies par un micro-processeur.

0146440

FIGURE 1

FIGURE 2

FIGURE 3

FIGURE 4

FIGURE 5

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-B-1 289 552  (SIEMENS)<br>* Colonne  2, ligne 33 - colonne 3, ligne 22 * | 1 | H 04 J    7/00 |
| A | | 4,6,8 | |
| | --- | | |
| Y | FR-A-2 282 760  (MIYAZAWA)<br>* Page 6, lignes 23-32 * | 1 | |
| A | | 3 | |
| | --- | | |
| Y | FR-E-  89 754  (VALENSI)<br>* Page 1, colonne de droite, dernier alinéa - page 2, colonne de droite, ligne 35 * | 1 | |
| | --- | | **DOMAINES TECHNIQUES RECHERCHES (Int. Cl.4)** |
| A | NACHRICHTENTECHNIK, vol. 20, no. 8, août 1970, pages 281-285, VEB Verlag Technik, Berlin, DD; W. KLEIN: "Amplitudenmehrfach - eine Möglichkeit zur simultanen Übertragung zweier verschiedener Nachrichten über einen Kanal"<br>* Page 281, colonne de gauche, lignes 6-18 * | 1,5 | H 04 B<br>H 04 L<br>H 04 J |
| | ----- | | |

Le présent rapport de recherche a été établi pour toutes les revendications

| Lieu de la recherche | Date d'achèvement de la recherche | Examinateur |
|---|---|---|
| LA HAYE | 22-02-1985 | HOLPER G.E.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82